# EUROPEAN PATENT APPLICATION

(11) **EP 4 523 672 A1**
(43) Date of publication of application: **19.03.2025**
(21) Application number: 24187191.2
(22) Date of filing: 08.07.2024
(51) Int. Cl.: A61H 9/00, A61H 23/02, B60N 2/90

(54) **MASSAGE ASSEMBLY WITH INTEGRAL HAPTIC MOTOR**

(30) Priority: 21.07.2023 US 202363514942 P; 05.06.2024 US 202418734377
(71) Applicant: Lear Corporation, Southfield, MI 48033 (US)
(72) Inventor: WASHINGTON, Tyler, Southfield, 48033 (US); KASPERCZYK, Grzegorz, 01-164 Warsaw (PL); GALAZKA, Kazimierz, Southfield, 48033 (US)
(74) Representative: Haseltine Lake Kempner LLP

(57) **Abstract**

An assembly comprises a plurality of fluid impermeable sheets that cooperate with each other to form one or more fluid chambers, wherein the one or more fluid chambers are in fluid communication with a fluid supply passage; and a vibration motor associated with the one or more fluid chambers.

## Description

### RELATED APPLICATIONS

This application claims the benefit of U.S. Provisional Application No. 63/514,942, filed July 21, 2023, and U.S. Patent Application No. 18/734377, filed June 5, 2024, the entirety of which are herein incorporated by reference.

### BACKGROUND

Seats may include lumber, bolster, and massage bladders. The bladders are inflated and deflated to provide a supporting or massage effect.

### BRIEF DESCRIPTION OF THE DRAWINGS

Figure 1 is a schematic of view of a first embodiment of the massage bladder with a haptic motor disposed thereon.
Figure 2 is a top view of the first embodiment of the massage bladder.
Figure 3 is a top perspective view of a second embodiment of a massage bladder with haptic motor disposed thereon.
Figure 4 is a top perspective view of a third embodiment of a massage bladder with a haptic motor disposed thereon.
Figure 5 is a partial cross-sectional view of a seat assembly.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundary less terms, and should be interpreted consistent with the way one skilled in the art would interpret those terms.

As required, detailed embodiments of the present invention are disclosed herein. However, it is to be understood that the disclosed embodiments are merely examples of the invention that may be embodied in various and alternative forms. The figures are not necessarily to scale. Some features may be exaggerated or minimized to show details of particular components. Specific structural and functional details disclosed herein are not to be interpreted as limiting, but merely as a representative basis for teaching one skilled in the art to variously employ the present invention.

As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Moreover, except where otherwise expressly indicated, all numerical quantities in this disclosure are to be understood as modified by the word "about" in describing the broader scope of this disclosure. Practice within the numerical limits stated is generally preferred. Also, unless expressly stated to the contrary: percent, "parts of," and ratio values are by weight. The term "polymer" includes "oligomer," "copolymer," "terpolymer," and the like. The description of a group or class of materials as suitable or preferred for given purpose implies the mixtures of any two or more of the members of the group or class are equally suitable or preferred. Molecular weights provided for any polymers refers to number average molecular weight. A description of constituents in chemical terms refers to the constituents at the time of addition to any combination specified in the description and does not necessarily preclude chemical interactions among the constituents of a mixture once mixed. The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

This disclosure is not limited to the specific embodiments and methods described below, as specific components and/or conditions may vary. Furthermore, the terminology used herein is used only for the purpose of describing particular embodiments and is not intended to be limiting in any way.

The term "substantially" or "generally" may be used herein to describe disclosed or claimed embodiments. The term "substantially" or "generally" may modify a value or relative characteristic disclosed or claimed in the present disclosure. In such instances, "substantially" or "generally" may signify that the value or relative characteristic it modifies is within manufacturing tolerances or within± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10.

Similarly, the range 1 to 100 includes 1, 2, 3, 4 ... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

This disclosure relates to massage assemblies, and more specifically to massage assemblies for vehicular seats including haptic motors.

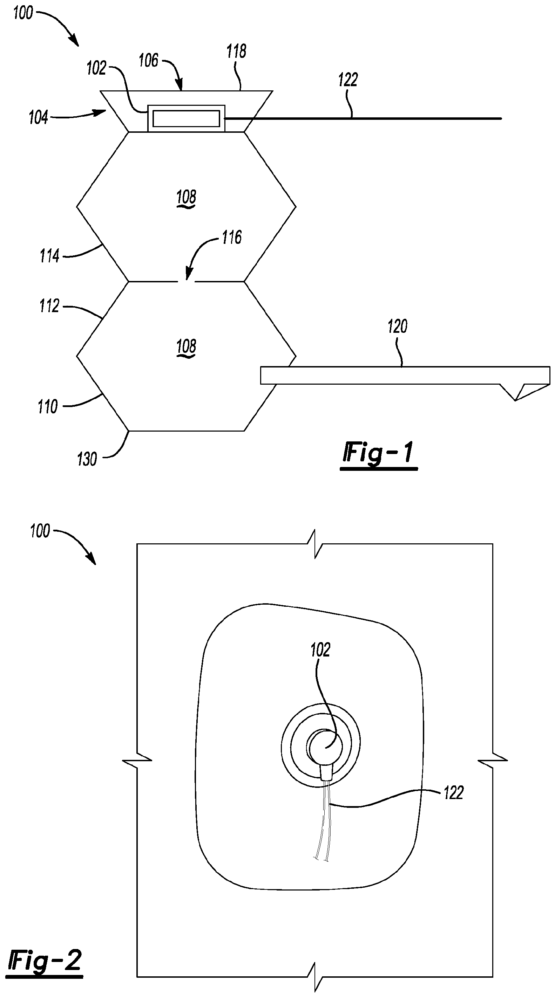

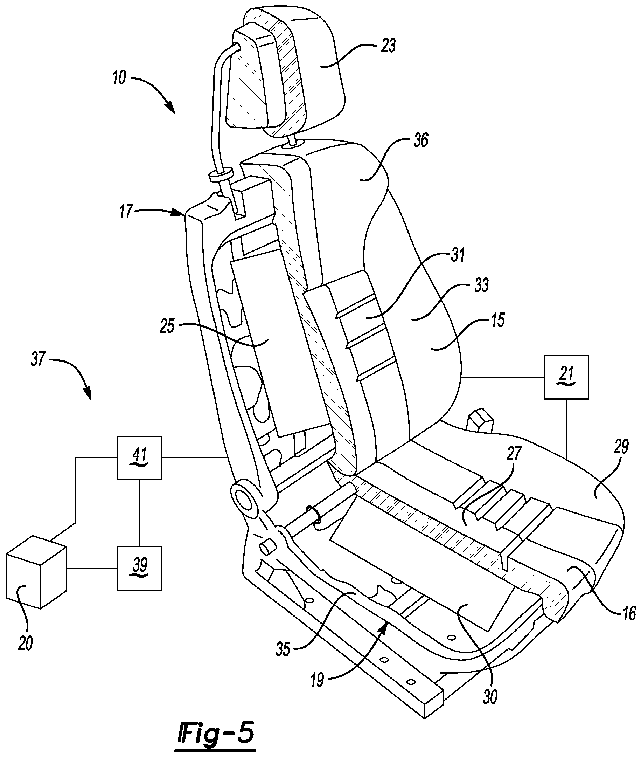

Referring to Figures 1-5, a bladder 100 including a vibration (e.g., haptic) motor 102 such as for a massage assembly 25 (Figure 5) is provided. In various embodiments, the massage assembly 25 is disposed in a seat 10 such as for a vehicle (e.g., a motorcycle, an automobile, a watercraft, an aircraft, a locomotive, or any other seating environment). In a refinement, the vibration (e.g., haptic) motor 102 is disposed in a receptacle 104 of the bladder 100 or disposed at or proximate an apex 106 of the bladder 100.

In one or more embodiments, the massage assembly 25 includes a bladder assembly including one or more bladders 100 (e.g., a plurality of bladders). For example, the bladder 100, as shown in Figures 1-4 may be representative of each bladder in the bladder assembly. The one or more bladders are in fluid communication with a fluid displacing device (e.g., a fluid actuator) such as a pump, a compressor, a fan, and/or a blower. In various embodiments, the fluid displacing device displaces and moves a fluid such as air or water to fill the one or more bladders such as to provide a massaging effect to an occupant. In a variation, a valve assembly (e.g., fluid actuator) is disposed between the bladder assembly and fluid displacing device. The valve assembly cooperates with the fluid displacing device and bladder assembly to provide a massaging effect. In a refinement, the bladder assembly is in fluid communication with the fluid displacing device via one or more fluid passages 120 such as pneumatic tubing. In various embodiments, the fluid passage 120 cooperates with a fluid chamber 108 of the bladder 100 and/or is disposed opposite the vibration motor 102 such that fluid enter the bladder 100 at a point furthest from the occupant whereas the vibration motor 102 is disposed such that it is most adjacent the occupant/outermost portion.

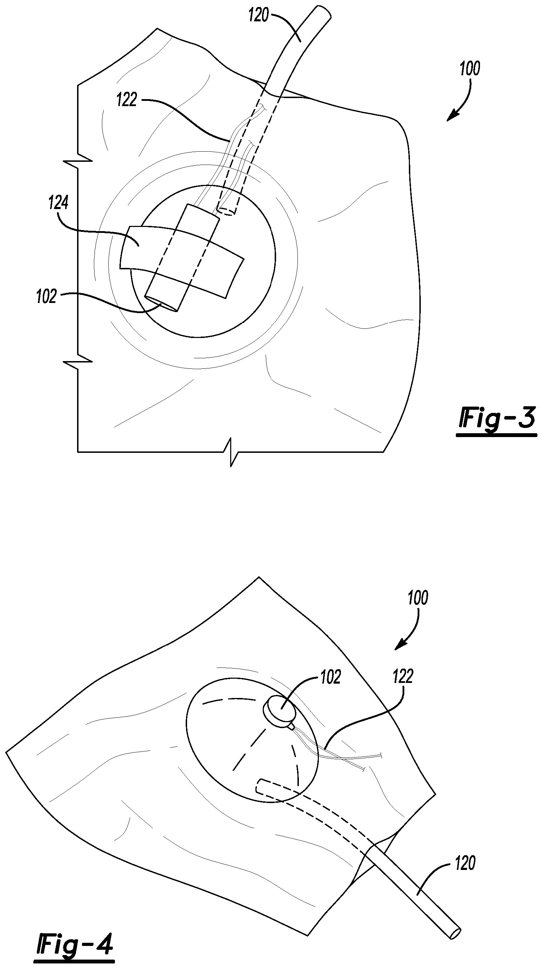

In various embodiments, each bladder 100 defines one or more fluid chambers 108 such as a plurality of chambers. For example, in a variation, a bellowed (e.g., accordion shaped) bladder is used, as shown in Figures 1 and 2. Alternatively, a spherical (e.g., hemi-spherical) shaped bladder may be used, as shown in Figures 3 and 4. In a refinement, a plurality of sheets (e.g., a first sheet 110, a second sheet 112, and a third sheet 114) such an impermeable plastic (e.g., polyurethane or polyethylene) sheets cooperate to form the bladder 100 and define one or more chambers 108. In a variation, the first sheet 110 cooperates with the second sheet 112 to define a first fluid chamber and the second sheet 112 cooperates with a third sheet 114 to define a second fluid chamber. In some embodiments, the second sheet 112 also defines a port 116 to provide passage of the fluid from the first chamber to the second chamber (and/or vice versa). In various embodiments, the bladder 100 includes a fourth sheet 118 cooperating with the third sheet 114 to define the receptacle 104 (e.g., pocket) to house the vibration motor 102. For example, the various sheets are fixed to each other to create a seal that is impermeable to the fluid (e.g., air) such as by heat staking, fusing, bonding, welding, an adhesive, alone or in combination, or any other suitable means of fixing the sheets together.

In a refinement, the vibration motor 102 is disposed on the bladder 100 adjacent a fluid chamber 108 such as at, or proximate, an apex 106 of the bladder 100. Thus, the vibration motor 102 is adjacent an occupant to provide a stronger vibration effect to the outermost surface of the bladder assembly, i.e., the occupant, while the bladder is filled with a fluid. For example, the vibration motor 102 provides a vibration massaging effect and/or haptic feedback. In a variation the vibration motor 102 is disposed on the apex of the bladder 100 and may be enclosed within a portion of bladder 100 such as the receptacle or additional chamber formed between sheets 114, 118.

In implementations, the vibration motor 102 can be mounted to the bladder 100 using any type of attachment configuration. For example, an adhesive 124 may be applied under or over the motor to attach the motor to the bladder 100 as shown in Figure 3. In another example, the vibration motor 102 can be seated/fit within an opening formed within the bladder 100 as shown in Figures 2 and 4. Other types of attachments could also be used such as heat staking, fusing, bonding, welding, etc.

In some embodiments, such as when the vibration motor 102 is disposed within a receptacle or between a sheets 114, 118 (e.g., the third and fourth sheets), the third and/or fourth sheet includes an aperture such as for a wire 122 to provide electrical communication and/or power to the vibratory motor 102. If the aperture is disposed in the third sheet it may need to be sealed to provide impermeability such that the fluid chamber may be filled. In a refinement, the aperture is disposed in the fourth sheet such that it does not need to be sealed.

In various embodiments, the vibration motor 102 is in communication with a control system including a controller 20 (shown in Figure 5) programmed to operate of the vibration motor 102. In a variation, the control system operates or controls the vehicle and cooperates with the vibration motor 102 of the massage assembly. In a refinement, the controller 20 operates the vibration motor 102 based on one or more operational controls (e.g., control inputs) such as of a vehicle and/or of the massage assembly. For example, the controller 20 receives an occupant request for a vibratory massage and operates the vibration motor 102 such as continuously to provide a vibratory massaging effect. In a variation, the controller 20 also operates the vibration motor 102 in response to various other vehicle controls such as but not limited to: a seat adjustment (e.g., changing a seat setting such as a position of the seat 10, a heating/cooling system of the seat 10 and/or vehicle, a ventilation system of the seat 10 and/or vehicle); changing dashboard and/or control panel setting such as the radio station, volume, navigation system; or even upon accelerating and/or stopping. In a refinement, a short vibratory confirmation or intermittent blast of vibrations are used to communicate haptically to the occupant by vibrating the outer surface of the bladder(s) 100 of the bladder assembly. Often the haptic response is in response to receiving a user input indicative of controlling the vehicle in some manner.

In still another embodiment, the controller 20 provides haptic communication (e.g., haptic feedback about operation of the seat/vehicle, a state of the seat/vehicle, or external stimuli) via the vibration motor 102 in response to environment such as the environment of the vehicle (e.g., external stimuli of the vehicle). In other words, the haptic feedback is also provided in response to the one or more inputs indicative of the conditions external the vehicle. For example, the haptic feedback is provided to an occupant to signal a lane change or a maneuver resembling a lane change (e.g., a lane change alert) and/or to signal an object such as another vehicle in a blind spot (e.g., blind spot alert). In yet another example, the vibration motor 102 is operated by the vehicle as it approaches an object such as when reversing.

In various embodiments, haptic operation of the vibration motor 102 is different than massaging operation of the vibration motor 102. For example, the vibration motor 102 is operated continuously or for longer periods of time (e.g., greater than 10 seconds, at least 30 seconds, at least a minute) when massaging, whereas haptic operation is a short burst (e.g., 10 seconds or less, less than 5 seconds or even less than a second) or short intermittent burst (e.g., three burst, five burst, or 10 burst). Additionally, or alternatively, different severities or levels of operation may be applied to provide haptic feedback. For example, a greater severity may be applied as the vehicle approaches an object to alert the driver and avoid an accident, whereas a lesser severity is used to signal less significant matters/operation such as a volume change. In still other embodiments, different haptic operation is used to signal receiving different inputs. For example, if an occupant turns up the volume a short half second soft (e.g., less than 40% of capacity) burst is provided, if a user is directing the vehicle into an object (such as reversing into a parked car) a 10-second hard (e.g., greater than 60% of capacity) vibration is used. In still further example, if a lane change is detected a three seconds hard burst is provided, and/or if an object is detected in the blind spot of a vehicle a three short 1-second medium burst that is different than the soft and hard bursts (e.g., 30 to 70%) is provided. In yet another example, a vibratory signal may be provided during acceleration, and may even correspond to the acceleration such that when the occupant presses the gas pedal hard, a hard vibration effect is provided and if the occupant presses the gas pedal softly, a soft vibration effect is provided.

In this way, the vibration motor 102 provides a massaging effect and operational information to the outermost surface of the outermost chamber of the bladder 100 and to an occupant when seated. In many embodiments, the vibration motor 102 is dual-functioning and may reduce the need for duplicate components to reduce cost and weight.

Referring to Figure 5, a seat assembly 10 according to one example embodiment is shown. In various embodiments, the seat assembly 10 includes a trim cover 15, disposed over a cushion assembly 16, which is supported by a frame 35. In one example, the trim cover 15 comprises a protective or decorative covering for a seat component and is comprised of material such as leather, PVC, PU, textile, etc. In this example, one side of the seat assembly 10 is shown with a seat cover/trim cover and foam cushion removed for revealing underlying components.

In a variation, the seat assembly 10 includes a seat back 17 and a seat bottom 19 cooperating with the seat back 17. The seat bottom 19 may be adapted to be mounted for motor-driven adjustable translation in a fore and aft direction and in an up and down direction of a vehicle. The seat back 17 may be pivotally connected to the seat bottom 19 to extend generally upright relative to the seat bottom 19 for pivotal adjustment relative to the seat bottom 19. A head restraint 23 may also be mounted to the seat back 17.

In implementations, the seat bottom 19 may include a central seating surface 27 and a seating surface along a pair of side bolster regions 29 (only one is shown) laterally spaced relative to the central seating surface 27. In implementations, the seat back 17 may include a pelvic/lumbar seating surface 31 with a pair of laterally spaced apart side bolster regions 33 (only one is shown) on either side. A thoracic/shoulder seating surface 36 may also be provided above the pelvic/lumbar seating surface 31 and the seating surface of seat back side bolster regions 33. It should be understood that this is just one example of a seat configuration, and that other configurations could also be utilized.

In one or more embodiments, the seat assembly 10 includes one or more subassemblies such as a massage assembly 25 and/or a ventilation assembly 30. Numerous other subassemblies may also be included such as but not limited to a temperature control assembly 21. In various embodiments, one or more vibration motors 102 (Figures 1-4) are disposed on apexes of a plurality of bladders 100 of the massage assembly 25 such that the bladders 100 impart a vibration effect to the trim cover 15 that can be felt by a seated occupant. In a refinement, the frame 35 is made of a rigid material sufficient to support the various subassemblies of the seat as well as a seated occupant. For example, the frame 35 comprises metal (e.g., steel or aluminum), plastic, and/or wood.

In implementations, the seat bottom 12 may include one or more bladders 100 under the central seating surface 27 and in the pelvic/lumbar seating area of the seat back 17. The seat bottom 12 may also include bladders 100 in the side bolster regions 29. Likewise, the seat back 17 may also include bladders 100 in the side bolster regions 33. In implementations, each of bladders may be supported upon the frame 35 of the corresponding seat bottom 19 and seat back 17. In implementations, the bladders in the side bolster regions 29, 33 provide lateral support to a seated occupant when the vehicle experiences a turn or cornering while bladders 100 in other areas of the seat bottom 19 and the seat back 17 can be used for lumbar or massage purposes.

In implementations, the seat assembly 10 also includes an actuator assembly 37 for controlling inflation of the bladders 100. The actuator assembly 37 may include a fluid supply 39 (e.g., a displacing device to supply pressurized fluid such as a pump, a compressor, a fan, and/or a blower) connected to a valve bank 41 to provide a source of fluid to the bladders 100 of the massage assembly 25 as shown in Figure 5. A seat control module is provided in the seat bottom 19 or seat back 17 and is identified generally as comprising one or more controllers 20. In one example, the controller 20 regulates compressed air into and out of the bladders 100. The controller 20 and actuator 37 may be installed in the seat back 17, installed under the seat 10, or installed anywhere suitable in the vehicle.

In various embodiments, the one or more controllers 20 are programmed to operate in various modes such as a first (e.g., haptic) mode and a different second (e.g., massaging) mode. In the haptic mode, the controller 20 receives input indicative of operation of the vehicle (e.g., window rolled down, radio station changed, seat moved, gas pedal pressed, lane change, approaching object in front of vehicle, blind spot alert, etc.) and responsive to receiving the operational input activates the vibration motor for a short, predetermined duration such as less than 10 seconds, or more preferably less than 5 seconds or even more preferably less than 3 seconds. In the massaging mode, the controller 20 receives a different operation input (e.g., turning vibratory massaging function on) and responsive to receiving the second operational input activates the vibration motor continually or for a longer predetermined period of time such as more than 5 continual seconds, or more preferably more than 10 continual second, or even more preferably for over a minute, or still more preferably for over 5 minutes. The operation of the vibration motor, for example, terminates in the first operational (haptic) mode automatically without receiving an additional operational input whereas operation of the vibration motor in the second operational (massaging) mode may not terminate within the prescribed duration without additional operational input such as receiving a request from the occupant to terminate the vibratory massage early (e.g., pressing an off button).

In one or more embodiments, the controller 20 includes a processor including one or more devices selected from high-performance computing systems including high-performance cores, microprocessors, micro-controllers, digital signal processors, microcomputers, central processing units, field programmable gate arrays, programmable logic devices, state machines, logic circuits, analog circuits, digital circuits, or any other device that manipulate signals (analog or digital) based on computer-executable instructions residing in memory such as in the controller. In variations, the memory includes a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. In a refinement, the non-volatile memory/storage includes one or more persistent data storage devices such as a hard drive, optical drive, tape drive, non-volatile solid state device, cloud storage or any other device capable of persistently storing information.

In one or more embodiment, the executable code/instructions may reside in a software module. In a refinement, the software module includes operating systems and applications. In various embodiments, the software module is compiled or interpreted from a computer program created using a variety of programming languages and/or technologies, including, without limitation, and either alone or in combination, Java, C, C++, C#, Objective C, Fortran, Pascal, Java Script, Python, Perl, and PL/SQL. Non-volatile storage may also include data supporting the functions, features, calculations, and processes.

In some embodiments, the systems described above include computer readable storage media, which is inherently non-transitory, and in various refinements includes volatile or non-volatile, and removable and non-removeable tangible media implemented in any method or technology for storage of information, such as computer-readable instructions, data structures, program modules, or other data. In a variation, computer readable storage media further includes RAM, ROM, erasable programable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. In various embodiments, the computer readable program instructions may be downloaded to a computer, another type of programmable data processing apparatus, or another device form of a computer readable storage medium or to an external computer or external storage device via a network.

In one or more embodiments, the computer readable program instructions stored in a computer readable medium may be used to direct a computer, other types of programmable data processing apparatus, or other devices to function in a particular manner, such that the instructions stored in the computer readable medium produce an article of manufacture including instructions that implement functions, acts, and/or operations described herein. The functions, acts, and/or operations described herein may be re-ordered, processed serially, and/or processed concurrently.

In implementations, the massage assembly 25 is comprised of a plurality of sheets 110, 112, 114 that form one or more fluid chambers 108. In one example, the plurality of sheets may be comprised of a thin, flexible, fluid impermeable material, such as for example, a plastic material, e.g., polyurethane or polyethylene. As shown in Figure 1, the sheets 110, 112, 114 may cooperate with each other to form a plurality of fluid chambers 108 that comprise individual compartments designed to hold a fluid substance. The fluid chambers 108 may be in fluid communication with a fluid supply passage 120, which comprises a conduit that connects the fluid chambers 108 to the fluid supply 39. In implementations, the vibration motor 102, e.g., the haptic motor, is associated with the one or more fluid chambers 108. Examples of haptic motors include eccentric rotating mass actuators (ERM), linear resonant actuators (LRA), and piezoelectric actuators.

In implementations, the one or more fluid chambers 108 are comprised of one or more fluid bladders 100, wherein at least one fluid bladder 100 directly supports, e.g., directly contacts, the vibration motor 102. In one example, the bladders 100 comprise pneumatic cells.

In implementations, the fluid bladder 100 includes a receptacle 104 that receives the vibration motor 102. In one example, the receptacle 104 comprises a pocket or recessed area located within the bladder 100.

In implementations, the fluid bladder 100 extends from a base end 130 within a seat structure (e.g., frame 35, seat back 17, seat bottom 19) to the apex end 106 that is adjacent the trim cover 15. In one example, the apex end 106 is distally located from the base end 130 and the vibration motor 102 is positioned at the apex end 106.

In implementations, each fluid bladder 100 in an associated massage assembly 25 includes at least one vibration motor 102.

In implementations, each fluid bladder 100 has a plurality of fluid chambers 108. In one example, each fluid bladder 100 with a plurality of fluid chambers 108 has only one vibration motor 102. In one example, each fluid bladder 100 with a plurality of fluid chambers 108 has more than one vibration motor 102.

In implementations, the fluid supply passage 120 is in fluid communication with the fluid supply 39 and valve bank 41 to supply fluid to the fluid bladder 100. In one example, the fluid supply passage 120 is positioned at the base end 130 and opposite from the motor 102.

In implementations, the bladder 100 includes at least a first and second fluid chambers 108 with at least one port 116 (e.g., aperture, opening, connecting passage) formed in one of the plurality of impermeable sheets 110, 112, 114 that fluidly connects the first and second fluid chambers together.

In implementations, the one or more controllers 20 control/operate the vibration motor(s) 102 such that the vibration motor 102 is responsive to one or more of the following inputs to the one or more controllers 20: a massage request; a vehicle input from a vehicle control system (e.g., seat adjustment, changing dashboard and/or control panel settings, accel/decel/stop vehicle performance, etc.); a user input (e.g., seat adjustment, temperature adjustment, volume control, etc.) from a user indicative of controlling one or more aspects of vehicle performance; an external input (e.g., lane changes, blind spot, object on road, etc.) indicative of conditions external to a vehicle.

In one example, the one or more controllers 20 are responsive to all of the following inputs, or any combination thereof: a massage request; a vehicle input from a vehicle control system; a user input from a user indicative of controlling one or more aspects of vehicle performance; an external input indicative of conditions external to a vehicle.

In implementations, the vibration motor 102 operates: in a first condition in response to the massage request; and in a second condition in response to the vehicle input, the user input, or the external input, wherein the second condition is different than the first condition. Examples of the first and second conditions may include: a variable time, e.g., length/duration of activation; a variable intensity, e.g. increasing/decreasing vibrational output; or a combination of variable time and variable intensity.

In implementations, the one or more controllers 20 may operate the vibration motor 102 based on operational information of a vehicle. For example, the vibration motor 102 may operate in a first mode (e.g., variable time and/or variable intensity) for a first vehicle operational characteristic and in a second mode (e.g., variable time and/or variable intensity), different from the first mode, for a second vehicle operational characteristic.

In one example, the first mode is operative for a first amount of time and the second mode is operative for a second amount of time that is less than the first amount of time.

In one example, the first mode is operative at a first intensity level (e.g., increased/decreased vibrational effect) and the second mode is operative at a second intensity level that is less than the first intensity level.

In implementations, the vibration effect, e.g., resonating tactile input, from the vibration motor is communicated to the trim cover 15.

In one example, varying pressurization (e.g., inflating/deflating) of the bladder 100 and variable vibrational output from the vibration motor 102 comprise tactile input to the trim cover 15.

In implementations, a method is disclosed in which tactile feedback to a seat occupant is provided by using the vibration motor 102 that is associated with the bladders 100. In one example, the method comprises: forming one or more fluid chambers using a plurality of fluid impermeable sheets; connecting the one or more fluid chambers to a fluid supply passage; and providing tactile feedback with a vibration motor that is associated with the one or more fluid chambers.

The method may also include: associating the one or more fluid bladders with a seat assembly with a trim cover disposed over the frame, the one or more fluid bladders, and the vibration motor; and directly supporting the vibration motor at an apex end of the one or more fluid bladders that is adjacent the trim cover.

The method may also include: operating the vibration motor in response to a plurality of different inputs; operating the vibration motor in at least a first mode in response to one input of the plurality of different inputs; and operating the vibration motor in at least a second mode, different than the first mode, in response to a different input of the plurality of different inputs.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

According to one example, an assembly comprises: a plurality of fluid impermeable sheets that cooperate with each other to form one or more fluid chambers, wherein the one or more fluid chambers are in fluid communication with a fluid supply passage; and a vibration motor associated with the one or more fluid chambers.

According to one example of any of the prior or following assemblies, the one or more fluid chambers comprise one or more fluid bladders, and wherein at least one fluid bladder directly supports the vibration motor.

According to one example of any of the prior or following assemblies, the at least one fluid bladder includes a receptacle that receives the vibration motor.

According to one example of any of the prior or following assemblies, the at least one fluid bladder extends from a base end within a seat structure to an apex end that is adjacent a trim associated with the seat structure, and wherein the vibration motor is positioned at the apex end.

According to one example of any of the prior or following assemblies, the fluid supply passage is associated with a fluid supply fluid and is in fluid communication with the at least one fluid bladder, and wherein the fluid supply passage is positioned at the base end.

According to one example of any of the prior or following assemblies, the one or more fluid chambers comprises at least a first fluid chamber and a second fluid chamber, and including at least one port formed in one of the plurality of impermeable sheets that fluidly connects the first fluid chamber to the second fluid chamber.

According to one example of any of the prior or following assemblies, one or more controllers operate the vibration motor such that the vibration motor is responsive to one or more of the following inputs to the one or more controllers: a massage request; a vehicle input from a vehicle control system; a user input from a user indicative of controlling one or more aspects of vehicle performance; an external input indicative of conditions external to a vehicle.

According to one example of any of the prior or following assemblies, one or more controllers operate the vibration motor such that the vibration motor is responsive to each of the following inputs to the one or more controllers: a massage request; a vehicle input from a vehicle control system; a user input from a user indicative of controlling one or more aspects of vehicle performance; and an external input indicative of conditions external to a vehicle.

According to one example of any of the prior or following assemblies, the vibration motor operates: in a first condition in response to the massage request; and in a second condition in response to the vehicle input, the user input, or the external input, wherein the second condition is different than the first condition.

According to one example of any of the prior or following assemblies, one or more controllers operate the vibration motor based on operational information of a vehicle, and wherein the vibration motor operates in a first mode for a first vehicle operational characteristic and in a second mode, different from the first mode, for a second vehicle operational characteristic.

According to one example of any of the prior or following assemblies, the first mode is operative for a first amount of time and the second mode is operative for a second amount of time that is less than the first amount of time.

According to one example of any of the prior or following assemblies, the first mode is operative at a first intensity level and the second mode is operative at a second intensity level that is less than the first intensity level.

According to one example of any of the prior or following assemblies, the one or more fluid chambers comprise one or more fluid bladders that are associated with a seat assembly that comprises: a frame; one or more fluid bladders supported by the frame; and a trim cover disposed over the frame, the one or more fluid bladders, and the vibration motor, and wherein a vibration effect from the vibration motor is communicated to the trim cover.

According to one example, an assembly comprises: a seat structure, a plurality of fluid impermeable sheets that cooperate with each other to form one or more fluid chambers, wherein the one or more fluid chambers are in fluid communication with a fluid supply passage; and a vibration motor associated with the one or more fluid chambers. A trim cover may be disposed over the seat structure, at least one fluid bladder, and the at least one vibration motor. Varying pressurization of the at least one fluid bladder and variable vibrational output from the at least one vibration motor may comprise tactile input to the trim cover.

According to one example, an assembly comprises: a seat structure; at least one fluid bladder comprising one or more fluid chambers that are in fluid communication with a fluid supply passage; at least one vibration motor associated with the one or more fluid chambers; and a trim cover disposed over the seat structure, at least one fluid bladder, and the at least one vibration motor, and wherein varying pressurization of the at least one fluid bladder and variable vibrational output from the at least one vibration motor comprise tactile input to the trim cover.

According to one example of any of the prior or following assemblies, one or more controllers operate the vibration motor such that the vibration motor is responsive to each of the following inputs to the one or more controllers: a massage request; a vehicle input from a vehicle control system; a user input from a user indicative of controlling one or more aspects of vehicle performance; and an external input indicative of conditions external to a vehicle.

According to one example of any of the prior or following assemblies, one or more controllers operate the vibration motor based on operational information of a vehicle, wherein the vibration motor operates in a first mode for a first vehicle operational characteristic and in a second, different from the first mode, for a second vehicle operational characteristic.

According to one example of any of the prior or following assemblies, the at least one fluid bladder extends from a base end within the seat structure to an apex end that is adjacent the trim cover, and wherein the at least one fluid bladder directly supports the vibration motor at the apex end.

According to one example, a method comprises: forming one or more fluid chambers using a plurality of fluid impermeable sheets; connecting the one or more fluid chambers to a fluid supply passage; and providing tactile feedback with a vibration motor that is associated with the one or more fluid chambers.

According to one example of any of the prior or following methods, the one or more fluid chambers comprise one or more fluid bladders, and the method includes: associating the one or more fluid bladders with a seat assembly that comprises: a frame; one or more fluid bladders supported by the frame; and a trim cover disposed over the frame, the one or more fluid bladders, and the vibration motor; and directly supporting the vibration motor at an apex end of the one or more fluid bladders that is adjacent the trim cover.

According to one example of any of the prior or following methods, the method includes: operating the vibration motor in response to a plurality of different inputs; operating the vibration motor in at least a first mode in response to one input of the plurality of different inputs; and operating the vibration motor in at least a second mode, different than the first mode, in response to a different input of the plurality of different inputs.

According to one example, an assembly comprises a first fluid impermeable sheet, a second fluid impermeable sheet cooperating with the first fluid impermeable sheet to define a first fluid chamber, a fluid passage in fluid communication with the first fluid chamber, and a vibration motor disposed adjacent the first fluid chamber.

According to one example of any of the prior or following assemblies, the vibration motor cooperates with the first or second fluid impermeable sheets.

According to one example of any of the prior or following assemblies, a third fluid impermeable sheet cooperates with the second fluid impermeable sheet to at least partially enclose the vibration motor.

According to one example of any of the prior or following assemblies, a fourth fluid impermeable sheet cooperates with the first fluid impermeable sheet opposite the second sheet to define a second fluid chamber in fluid communication with the first fluid chamber.

According to one example of any of the prior or following assemblies, the first fluid impermeable sheet comprises a port for fluid communication between the first and second fluid chambers.

According to one example of any of the prior or following assemblies, the vibration motor is arranged at an apex of the first fluid chamber when the first fluid chamber is filled with a fluid.

According to one example of any of the prior or following assemblies, the vibration motor is arranged opposite the fluid passage.

According to one example of any of the prior or following assemblies, the vibration motor is operated in response to one or more operational controls of a vehicle.

According to one example of any of the prior or following assemblies, the vibration motor is operated in response to one or more inputs indicative of conditions external of a vehicle.

According to one example of any of the prior or following assemblies, the vibration motor conveys operational information to the first fluid chamber.

According to one example of any of the prior or following assemblies, the operational information is indicative of operational information of a vehicle.

According to one example of any of the prior or following assemblies, a seat assembly comprises a frame, the assembly of any of the prior or following clauses supported by the frame, and a trim cover disposed over the assembly of any of the prior or following clauses so that a pressurized effect of the assembly of any of the prior or following clauses and a vibration effect of the vibration motor are imparted to the trim cover.

According to one example of any of the prior or following assemblies, a seat assembly comprises a seat frame supporting a massaging assembly and a control system. The massaging assembly comprises a plurality of fluid bladders in fluid communication with a fluid actuator to receive a fluid, a vibration motor cooperating with the one or more bladders, and a trim cover disposed over the seat frame, massage assembly and vibration motor. The control system is programmed to operate the vibration motor such that the vibration motor vibrates the trim cover in response to operational information.

According to one example of any of the prior or following assemblies, the operational information comprises one or more control inputs received from an occupant.

According to one example of any of the prior or following assemblies, the one or more control inputs is a seat adjustment request.

According to one example of any of the prior or following assemblies, the operational information comprises an indication of a state of an external environment of a vehicle.

According to one example of any of the prior or following assemblies, the vibration motor is disposed on at least one of the one or more bladders.

According to one example of any of the prior or following assemblies, the vibration motor is disposed in a receptacle on a fluid bladder of the plurality of fluid bladder.

According to one example of any of the prior or following assemblies, an assembly comprises a massage assembly and a controller. The massage assembly comprises a bladder assembly and a vibration motor. The controller is in communication with the vibration motor and programmed to operate in a first operational mode and a second operational mode. In the first operational mode the controller receives a first operational input and responsive to the first operational input, activates the vibration motor for a predetermined duration that is no more than 10 continual seconds. In the second operational mode the controller receives a second operational input that is different than the first operational input and responsive to the second operational input, activates the vibration motor for more than 10 continual seconds.

According to one example of any of the prior or following assemblies, the predetermined duration of any of the prior clauses is less than five continual seconds.

Although the different examples have the specific components shown in the illustrations, embodiments of this disclosure are not limited to those particular combinations. It is possible to use some of the components or features from one of the examples in combination with features or components from another one of the examples.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An assembly comprising:
a plurality of fluid impermeable sheets that cooperate with each other to form one or more fluid chambers, wherein the one or more fluid chambers are in fluid communication with a fluid supply passage; and
a vibration motor associated with the one or more fluid chambers.

2. The assembly of claim 1, wherein the one or more fluid chambers comprise one or more fluid bladders, and wherein at least one fluid bladder directly supports the vibration motor.

3. The assembly of claim 2, wherein the at least one fluid bladder includes a receptacle that receives the vibration motor.

4. The assembly of claim 2 or 3, wherein the at least one fluid bladder extends from a base end within a seat structure to an apex end that is adjacent a trim associated with the seat structure, and wherein the vibration motor is positioned at the apex end or the at least one fluid bladder directly supports the vibration motor at the apex end.

5. The assembly of any of claims 2 to 4, wherein the fluid supply passage is associated with a fluid supply fluid and is in fluid communication with the at least one fluid bladder, and wherein the fluid supply passage is positioned at the base end.

6. The assembly of any of claims 2 to 5, wherein the one or more fluid chambers comprises at least a first fluid chamber and a second fluid chamber, and including at least one port formed in one of the plurality of impermeable sheets that fluidly connects the first fluid chamber to the second fluid chamber.

7. The assembly of any of the preceding claims, wherein the one or more fluid chambers comprise one or more fluid bladders that are associated with a seat assembly that comprises:
a frame;
one or more fluid bladders supported by the frame; and
a trim cover disposed over the frame, the one or more fluid bladders, and the vibration motor, and wherein a vibration effect from the vibration motor is communicated to the trim cover.

8. An assembly comprising:
a seat structure;
at least one fluid bladder comprising one or more fluid chambers that are in fluid communication with a fluid supply passage;
at least one vibration motor associated with the one or more fluid chambers; and
a trim cover disposed over the seat structure, at least one fluid bladder, and the at least one vibration motor, and wherein varying pressurization of the at least one fluid bladder and variable vibrational output from the at least one vibration motor comprise tactile input to the trim cover.

9. The assembly of any of claims 1 to 8, including one or more controllers that operate the vibration motor such that the vibration motor is responsive to one or more or each of the following inputs to the one or more controllers:
a massage request;
a vehicle input from a vehicle control system;
a user input from a user indicative of controlling one or more aspects of vehicle performance; and
an external input indicative of conditions external to a vehicle.

10. The assembly of claim 9, wherein the vibration motor operates:
in a first condition in response to the massage request; and
in a second condition in response to the vehicle input, the user input, or the external input, wherein the second condition is different than the first condition.

11. The assembly of any of claims 1 to 10, including one or more controllers that operate the vibration motor based on operational information of a vehicle, wherein the vibration motor operates in a first mode for a first vehicle operational characteristic and in a second, different from the first mode, for a second vehicle operational characteristic.

12. The assembly of claim 11, wherein the first mode is operative for a first amount of time and the second mode is operative for a second amount of time that is less than the first amount of time, and/or wherein the first mode is operative at a first intensity level and the second mode is operative at a second intensity level that is less than the first intensity level.

13. A method comprising:
forming one or more fluid chambers using a plurality of fluid impermeable sheets;
connecting the one or more fluid chambers to a fluid supply passage; and
providing tactile feedback with a vibration motor that is associated with the one or more fluid chambers.

14. The method of claim 13, wherein the one or more fluid chambers comprise one or more fluid bladders, and
including:
associating the one or more fluid bladders with a seat assembly that comprises:
a frame;
one or more fluid bladders supported by the frame; and
a trim cover disposed over the frame, the one or more fluid bladders, and the vibration motor; and
directly supporting the vibration motor at an apex end of the one or more fluid bladders that is adjacent the trim cover.

15. The method of claim 13 or 14, including:
operating the vibration motor in response to a plurality of different inputs;
operating the vibration motor in at least a first mode in response to one input of the plurality of different inputs; and
operating the vibration motor in at least a second mode, different than the first mode, in response to a different input of the plurality of different inputs.
